# FASCICULE DE BREVET EUROPEEN

(11) **EP 2 662 543 B1**
(45) Date de publication et mention de la délivrance du brevet: **23.03.2016**
(21) Numéro de dépôt: 13002124.9
(22) Date de dépôt: 23.04.2013
(51) Int. Cl.: F01M 1/18, F01M 11/10

(54) **Dispositif de contrôle par dépressurisation de l'étanchéité d'une boîte de transmission d'un giravion**
Kontrollvorrichtung durch Druckminderung der Dichtheit eines Getriebes eines Drehflügelflugzeugs
Device for controlling the tightness of a rotorcraft gearbox by depressurisation

(30) Priorité: 07.05.2012 FR 1201311
(43) Date de publication de la demande: 13.11.2013
(73) Titulaire: Airbus Helicopters, 13725 Marignane Cedex (FR)
(72) Inventeur: Huillet, Daniel, 13700 Marignane (FR); Quintric, Vincent, 13340 Rognac (FR)
(74) Mandataire: GPI & Associés

(56) Documents cités:
- WO-A2-2008/091341
- GB-A- 2 266 964
- JP-A- 2010 058 792

## Description

La présente invention est du domaine des boîtes de transmission équipant les giravions, procurant une transmission de mouvement entre au moins une source motrice et au moins une source réceptrice, telle qu'un organe du giravion à entraîner. La présente invention relève plus particulièrement des dispositions relatives à la lubrification d'organes en mouvement logés dans un carter que comportent de telles boîtes de transmission.

L'objet de la présente invention relève plus spécifiquement des modalités de surveillance du fonctionnement d'une telle boîte de transmission vis-à-vis d'une déperdition d'un lubrifiant, huile notamment, contenu dans un carter de la boîte de transmission. Une telle déperdition de lubrifiant trouve par exemple sa source dans une défaillance d'étanchéité structurelle du carter et/ou dans une défaillance d'organes d'étanchéité du carter.

Les giravions sont équipés de diverses boîtes de transmission de mouvement entre au moins une source motrice et au moins une source réceptrice. Par exemple, un groupe de motorisation du giravion affecté à l'entraînement d'au moins un rotor est équipé d'au moins une boîte de transmission mécanique de puissance depuis un organe moteur du groupe de motorisation vers le ou les rotors. Par exemple encore, des boîtes de transmission secondaires sont susceptibles d'être en prise sur la boîte de transmission principale pour l'entraînement de divers équipements et/ou accessoires du giravion.

Les boîtes de transmission mécanique comprennent un carter de montage de divers organes de transmission placés en prise entre eux et portés par des arbres de transmission. Les arbres de transmission sont notamment des arbres d'entraînement ou des arbres intermédiaires.

Les arbres d'entraînement comprennent par exemple au moins un arbre d'entrée entraîné à partir d'une source motrice et au moins un arbre de sortie d'entraînement d'un équipement à mouvoir. Un ou plusieurs arbres intermédiaires sont interposés entre un arbre d'entrée et un arbre de sortie. Les arbres de transmission sont en prise les uns avec les autres par l'intermédiaire des organes de transmission dont ils sont porteurs, et sont montés sur le carter par l'intermédiaire d'organes de roulement.

Par analogie aux boîtes de transmission mécanique, il est aussi connu des boîtes de montage d'organes en mouvement, arbres tournants notamment, qui sont montés sur des paliers d'un carter par l'intermédiaire d'organes de roulement, un mouvement étant transmis depuis au moins une entrée d'arbre vers au moins une sortie d'arbre.

Les organes en mouvement des boîtes de transmission, tels que notamment des organes de transmission, des arbres de transmission et/ou des organes de roulement, sont soumis à un échauffement provoqué par les frottements qu'ils subissent. Pour préserver les organes en mouvement d'un tel échauffement, les boîtes de transmission sont couramment équipées d'un circuit de lubrification. Une réserve de lubrifiant, huile notamment, est ménagée à l'intérieur du carter. Le lubrifiant circule à travers le circuit de lubrification entre le carter et un échangeur de chaleur permettant de refroidir le lubrifiant.

Un problème général posé réside dans l'étanchéité du carter qui peut être défaillante. Des fuites de lubrifiant peuvent être constatées et une vérification régulière de l'étanchéité du carter est nécessaire.

Par exemple, le carter comporte souvent plusieurs éléments de carter assemblés entre eux. Un tel assemblage est une source potentielle de fuite dans la zone de jonction des éléments de carter les uns aux autres.

Par exemple encore, les organes de roulement interposés entre le carter et les arbres d'entraînement sont potentiellement une source de fuite en lubrifiant. Pour éviter de telles fuites, le carter et/ou les organes de roulement sont couramment munis d'organes d'étanchéité. Cependant, une usure et/ou une défaillance des organes d'étanchéité autorisent une échappée du lubrifiant hors du carter.

Par exemple encore, les carters sont couramment munis d'au moins un évent pour autoriser une échappée naturelle de l'air contenu à l'intérieur du carter. Une telle échappée naturelle est nécessaire, en raison de la dilatation de l'air contenu dans le carter sous l'effet de la montée en température induite par l'échauffement des organes en mouvement. On pourra à ce propos se reporter par exemple au document DE102007026338 (MAGNA POWERT AG & CO KG.), qui propose d'interdire une échappée du lubrifiant à travers l'évent, en exploitant une membrane déformable obturant l'évent et se déformant sous l'effet de la dilatation de l'air.

Préalablement à la mise en service des boîtes de transmission, il est traditionnel d'effectuer des opérations de vérification de leur étanchéité. Selon une méthode traditionnelle, la boîte de transmission est enduite d'un produit susceptible de révéler ses zones potentiellement sources d'une échappée de lubrifiant hors du carter. Les sources de fuite révélées sont ensuite individuellement traitées, pour remédier aux défaillances constatées de l'étanchéité de la boîte de transmission. L'étanchéité de la boîte de transmission est ensuite à nouveau vérifiée pour contrôler l'efficacité du traitement des sources de fuite. Une éventuelle opération de vérification supplémentaire sous conditions de mise en mobilité des organes en mouvement de la boîte de transmission est couramment effectuée. Pour cela, le carter est rempli d'un liquide et les organes en mouvement sont entraînés pendant une durée prédéterminée, pour vérifier une éventuelle échappée du liquide hors du carter.

De telles modalités de vérification de l'étanchéité des boîtes de transmission sont longues et coûteuses, mais sont efficaces et nécessaires au regard des contraintes de sécurité dont relèvent les aéronefs. De fait, Il est recherché d'éviter au mieux un éventuel défaut de constat d'une étanchéité rigoureuse de la boîte de transmission.

Un premier but de la présente invention est de se soustraire à de telles contraintes de vérification de l'étanchéité des boîtes de transmission embarquées à bord des giravions. Il est plus particulièrement recherché de parvenir à l'assurance d'un constat fiable de l'état de l'étanchéité de la boîte de transmission préalablement à son montage sur un giravion et à sa mise en service, en évitant la mise en oeuvre d'une méthode longue et coûteuse pour parvenir à une telle assurance.

Au regard de la sécurisation des giravions, et de façon générale, les opérations de maintenance sont fréquentes et induisent des coûts qu'il est opportun de réduire. De telles opérations de maintenance comprennent une vérification des organes essentiels du giravion, dont notamment les boîtes de transmission au regard de leur étanchéité.

Un deuxième but de la présente invention est de réduire les coûts des opérations de maintenance d'un giravion, en facilitant les opérations de contrôle de l'étanchéité des boîtes de transmission et en limitant les éventuelles réparations des fuites constatées à celles jugées relevant de fuites significatives, notamment au regard de la sécurisation du giravion.

Toujours au regard de la sécurisation des giravions, il est opportun de proposer des solutions permettant de pallier une éventuelle défaillance de faible ampleur d'un organe du giravion dans l'attente de sa réparation. Il est souhaitable que les solutions mises en oeuvre soient suffisantes sans être excessives, dans l'attente d'une vérification du giravion dans le cadre d'une visite de contrôle et de maintenance.

Un troisième but de la présente invention est de proposer une telle solution palliative maintenant une étanchéité suffisante d'une boîte de transmission équipant un giravion, dans l'attente d'une réparation pérenne d'un défaut d'étanchéité de la boîte de transmission au cours d'une opération planifiée de maintenance du giravion.

Pour apprécier l'environnement technologique de la présente invention au regard de ce troisième but, il est possible de se référer à une technique connue dans le domaine des aéronefs qui consiste à dépressuriser un carter logeant des organes en mouvement, pour éviter une déperdition de lubrifiant causée par une défaillance d'étanchéité du carter. Le carter est par exemple un carter d'une boîte de transmission mécanique, tel que divulgué par WO2008091341 (SIKORSKY AIRCRAFT Corp. et al.), ou encore un carter de montage d'un arbre moteur entraîné à partir d'une turbine, tel que divulgué par US6470666 (GENERAL ELECTRIC Comp. et al.).

On pourra aussi se reporter à un environnement technologique plus éloigné de la présente invention. Par exemple le document JP2010058792 (TATSUNO CORP) décrit un dispositif de détection de fuite d'une cuve enterrée. Par exemple encore le document GB2266964 (SNECMA) décrit un circuit de lubrification d'organes logés dans un carter. Le circuit de lubrification est agencé pour provoquer une surpression dans un réservoir d'huile en cas de fuite dans un échangeur huile/carburant monté sur le circuit de lubrification.

Selon le document WO2008091341, un niveau de lubrifiant est maintenu au mieux à l'intérieur d'un carter d'une boîte de transmission d'un giravion, en cas d'une détérioration importante du carter à la source d'une échappée conséquente de lubrifiant. Le circuit de lubrification est mis à profit pour générer une dépression à l'intérieur du carter, à partir d'une détection d'une quantité de lubrifiant contenu à l'intérieur du carter qui est significativement inférieure à une quantité usuelle de lubrifiant en mode de fonctionnement courant de la boîte de transmission.

En cas d'une détérioration du carter, tel qu'en cas d'un impact perforant subi par le carter, l'évent du carter est obturé pour générer une dépression à l'intérieur du carter. La dépression est générée à partir de l'échappée du lubrifiant hors du carter, pour retenir au mieux la quantité de lubrifiant restante à l'intérieur du carter dans l'attente d'un atterrissage d'urgence du giravion.

Selon le document US6470666, il est recherché d'éviter une échappée de lubrifiant hors d'une chambre logée à l'intérieur du carter. La chambre est munie d'un évent et est alimentée en lubrifiant à partir d'un circuit de lubrification.

En mode nominal de fonctionnement de la turbine, le volume intérieur du carter est placé sous pression de sorte que ladite pression fasse obstacle à une échappée du lubrifiant hors de la chambre. Cependant en cas d'un changement de régime de la turbine, une chute de ladite pression est induite et un tel obstacle est affaibli. La chambre est alors mise en dépression pour éviter une échappée du lubrifiant vers le volume intérieur du carter. Une telle mise sous dépression est provoquée à partir d'un circuit de dépressurisation en communication aéraulique avec un évent que comporte la chambre.

Il ressort de l'ensemble des éléments qui viennent d'être exposés un besoin global de contrôle au sol de l'étanchéité du carter et de retenue du lubrifiant à l'intérieur du carter en mode de fonctionnement de la boîte de transmission.

La présente invention s'inscrit dans le cadre prioritaire d'un contrôle de l'étanchéité d'une boîte de transmission mécanique ou boîte analogue d'un giravion logeant des organes en mouvement lubrifiés, et dans un cadre subsidiaire mais recherché de retenue du lubrifiant à l'intérieur de la boîte de transmission exploitée en vol.

Il est plus particulièrement recherché par la présente invention de proposer un dispositif de contrôle de l'étanchéité d'une boîte de transmission ou analogue apte à être exploité au sol, préalablement à sa mise en service et/ou dans le cadre d'opérations de maintenance planifiées de cette boîte de transmission, en prenant en compte les contraintes et objectifs qui ont été énoncés.

Un tel dispositif de contrôle est aussi recherché pouvant être exploité pour retenir au mieux le lubrifiant à l'intérieur de la boîte de transmission dans l'attente d'une vérification de son étanchéité dans le cadre d'opérations de maintenance planifiées de cette boîte de transmission.

Le dispositif de contrôle est encore recherché de structure simple et facilement adaptable, sans modification structurelle majeure, à une boîte de transmission d'un quelconque agencement et équipé de quelconques modalités d'implantation à bord du giravion et/ou de quelconques dispositions prévues pour sa lubrification.

Le dispositif de la présente invention est un dispositif de contrôle de l'état d'étanchéité d'un carter logeant des organes en mouvement lubrifiés que comprend une boîte de transmission d'un giravion. Le carter est notamment un carter fermé dont le volume intérieur est normalement confiné, exception faite de sa mise en relation avec l'air extérieur par l'intermédiaire du circuit aéraulique.

Selon la présente invention, le dispositif est principalement reconnaissable en ce qu'il comprend un circuit aéraulique ouvert sur l'atmosphère à son extrémité aval. Le circuit aéraulique comporte à son extrémité amont des moyens de raccordement étanche à un évent du carter, et est équipé d'un organe générateur de dépression à l'intérieur du circuit aéraulique. La mise en oeuvre de l'organe générateur de dépression est placée sous la dépendance de moyens de commande. Le dispositif comprend encore des moyens de régulation de ladite dépression entretenue stable à l'intérieur du circuit aéraulique au regard d'un seuil de consigne. La mise en oeuvre des moyens de régulation est au moins placée sous la dépendance d'un manomètre de mesure de la dépression générée à l'intérieur du circuit aéraulique.

Lorsque le circuit aéraulique est raccordé à l'évent, le carter est en communication aéraulique avec le circuit aéraulique. Une telle communication aéraulique confère au carter sa participation structurelle au circuit aéraulique. Les notions amont et aval sont à considérer au regard du sens d'écoulement du fluide à travers le circuit aéraulique, depuis les dits moyens de raccordement vers l'extérieur du circuit aéraulique ouvert sur l'atmosphère.

Les moyens de raccordement étanche sont des moyens courants de jonction étanche entre deux organes à raccorder de manière aéraulique. De tels moyens de raccordement mettent notamment en oeuvre deux organes de jonction coopérants respectivement ménagés en sortie de l'évent du carter et à l'extrémité amont du circuit aéraulique.

L'organe générateur de dépression est de préférence formé d'une pompe à vide ou organe analogue, et est alimenté en énergie électrique à partir d'une source électrique basse tension. Le fonctionnement de l'organe générateur de dépression à partir d'une source électrique basse tension autorise sa mise en oeuvre au sol à partir d'une réserve d'énergie électrique et en vol à partir du réseau électrique de bord du giravion.

Les moyens de régulation sont notamment compris dans les moyens de commande et sont générateurs d'ordres de régulation de la mise en oeuvre de l'organe générateur de dépression, en fonction au moins de la valeur de la dépression mesurée dans le circuit aéraulique au moyen du manomètre. A partir des ordres de régulation, dont la génération est placée sous la dépendance de données fournies au moins par le manomètre, les moyens de régulation entretiennent la stabilité de la dépressurisation du carter au regard du seuil de consigne. Le seuil de consigne est susceptible d'être un seuil de consigne prédéfini ou d'être un seuil de consigne calculé par des moyens de calcul que comprennent les moyens de régulation tel que visé plus loin.

La dépressurisation est maintenue stable à l'intérieur du carter par les moyens de régulation au regard du seuil de consigne. En l'absence de fuite, la dépressurisation obtenue à l'intérieur du carter au seuil de consigne est naturellement maintenue sans activation significative de l'organe générateur de dépression. Une activation soutenue de l'organe générateur de dépression pour maintenir la dépressurisation du carter au seuil de consigne est révélatrice d'une source de fuite en lubrifiant. L'importance de cette fuite en lubrifiant peut être évaluée au moins en fonction de la fréquence à laquelle l'organe générateur de dépression est activé, sinon aussi en fonction de l'énergie électrique consommée par l'organe générateur de dépression. L'organe générateur de dépression étant de préférence un organe mu par l'énergie électrique, l'énergie électrique qu'il consomme est aisément déterminée par des moyens appropriés courants.

La localisation de la source de fuite est aisément obtenue par l'opérateur, à partir d'une dépressurisation du carter qui génère ostensiblement un appel d'air extérieur vers l'intérieur du carter à travers la source de fuite. De telles dispositions sont avantageuses pour isoler rapidement et aisément à partir d'une observation visuelle par un opérateur, une éventuelle source de fuite dans un environnement sale tel que celui des boîtes de transmission.

Une sonde du manomètre est préférentiellement placée sur le circuit aéraulique au plus proche du carter, et notamment dans son volume intérieur sous condition du raccordement de l'évent du carter au circuit aéraulique.

Selon une forme avantageuse de réalisation, le dispositif comprend des moyens générateurs d'informations au moins relatives à la mise en oeuvre de l'organe générateur de dépression par les moyens de régulation. Les moyens générateurs d'informations sont notamment en relation avec les moyens de régulation, à partir desquels sont potentiellement fournies des données relatives au moins au fonctionnement de l'organe générateur de dépression.

Les modalités de fonctionnement de l'organe générateur de dépression sont révélatrices d'une instabilité de la dépression générée dans le circuit aéraulique, et plus particulièrement dans le carter joint au circuit aéraulique. Les dites informations permettent à un opérateur au sol de repérer la présence d'une éventuelle source de fuite de lubrifiant hors du carter.

La collecte des informations est susceptible d'être opérée au sol préalablement à la mise en service de la boîte de transmission, et/ou avantageusement en vol après implantation du dispositif à bord d'un giravion et exploitation en vol de la boîte de transmission. A partir de l'historique au moins du fonctionnement de l'organe générateur de dépression, révélateur d'une éventuelle fuite dé lubrifiant hors du carter et de son importance, le personnel au sol est en mesure d'évaluer l'état d'étanchéité de la boîte de transmission et l'opportunité d'effectuer d'éventuelles opérations de réparation et/ou de maintenance.

De préférence, les moyens générateurs d'informations comprennent des moyens chronologiques associés au moins à des moyens de détection d'une activation et inversement d'un arrêt du fonctionnement de l'organe générateur de dépression, sinon aussi associés au moins à des moyens d'évaluation de l'énergie électrique consommée par l'organe générateur de dépression.

Les informations sont au moins relatives à une surveillance de la fréquence de mise en oeuvre en tout ou rien de l'organe générateur de dépression. Il est préféré d'affiner ces informations par une surveillance de l'énergie électrique consommée par l'organe générateur de dépression, pour évaluer les efforts qu'il fournit afin de maintenir la stabilité de la dépressurisation du circuit aéraulique au seuil de consigne.

Les moyens générateurs d'informations sont avantageusement associés au moins à des moyens de mémoire des informations générées sinon aussi à des moyens de transcription des informations générées.

Les dits moyens de transcription sont par exemple du type par voie d'affichage, par voie d'impression d'un document et/ou autre technique de transcription analogue mettant en oeuvre un moyen de transcription que comprend le dispositif. Les moyens de transcription permettent à un personnel au sol de consulter un historique de données relatives au moins au fonctionnement de l'organe générateur de dépression à partir des dites informations générées et collectées. Une analyse effectuée par l'opérateur de l'historique des données lui permet d'évaluer l'importance d'une éventuelle fuite en lubrifiant hors du carter.

Les moyens de commande comprennent notamment un commutateur à commande manuelle d'alimentation sélective en énergie électrique de l'organe générateur de dépression. Le dit commutateur permet à l'opérateur de couper l'alimentation électrique de l'organe générateur de dépression lors des opérations de maintenance et/ou de réparation de la boîte de transmission, et notamment en cas de besoin d'une ouverture du carter induisant sa mise à l'air libre.

Selon une forme préférée de réalisation, les moyens de régulation comprennent des moyens de calcul du seuil de consigne au regard d'un différentiel de pression de consigne prédéterminé, entre la dépression générée à l'intérieur du circuit aéraulique et la pression atmosphérique mesurée par un capteur de pression placé à l'extérieur du circuit aéraulique.

Un tel différentiel de pression de consigne est notamment apprécié au regard d'une dépression de référence souhaitée être entretenue dans le circuit aéraulique, considérée à une pression atmosphérique moyenne au sol.

En situation de vol du giravion, la pression atmosphérique varie selon l'altitude. Il est recherché une stabilité de l'écart de pression entre la pression atmosphérique environnant le circuit aéraulique, et notamment le carter, et la dépression générée à l'intérieur du circuit aéraulique. Le seuil de consigne est dans ce cas défini au regard du dit différentiel de pression de consigne prédéterminé.

De préférence, les moyens de régulation comprennent encore un clapet ménagé sur une entrée d'air extérieur placée en dérivation du circuit aéraulique entre ses extrémités. Le clapet est manoeuvrable par un actionneur dont la mise en oeuvre est placée sous la dépendance des moyens de calcul.

Une variation d'altitude du giravion induisant une modification du seuil de consigne en fonction de la pression atmosphérique courante mesurée, une baisse de la pression atmosphérique est susceptible d'induire une dépressurisation conséquente du carter à partir d'un seuil de consigne préalablement calculé sur le fondement d'une montée de pression atmosphérique. Une telle dépressurisation conséquente induit un risque de détérioration des organes fragiles de la boîte de transmission, et notamment des organes d'étanchéité. Pour éviter un tel risque, une mise à l'air du circuit aéraulique est provoquée à partir d'une manoeuvre à l'ouverture du clapet, jusqu'à parvenir à une dépressurisation du carter conforme au différentiel de pression de consigne.

Les moyens générateurs d'informations sont de préférence générateurs d'informations complémentaires relatives au moins à la pression atmosphérique mesurée, sinon aussi à la manoeuvre du clapet par l'actionneur. Les informations complémentaires sont notamment issues de données fournies par les moyens de régulation.

Le dispositif est susceptible de comporter des moyens d'alarme dont la mise en oeuvre est placée sous la dépendance des moyens générateurs d'informations. De tels moyens d'alarme sont par exemple générateurs d'un message d'alarme communiqué au pilote du giravion au moyen d'un organe d'alarme apte à être implanté au tableau de bord d'un giravion. De tels moyens d'alarme sont encore susceptibles d'être exploités par un opérateur au sol pour l'alerter d'une éventuelle opération de maintenance à effectuer sur la boîte de transmission. De tels moyens d'alarme sont susceptibles de générer deux signaux d'alarme distincts propres à être utiles respectivement pour le pilote du giravion et pour un opérateur de maintenance au sol.

Une activation soutenue de l'organe générateur de dépression au regard d'un seuil prédéterminé de fonctionnement, est révélatrice d'une source de fuite conséquente du lubrifiant hors du carter. Une telle source de fuite conséquente étant évaluée au regard du seuil de fonctionnement comme nécessitant une opération de maintenance de la boîte de transmission, un premier signal d'alarme utile à un opérateur au sol est émis. Une telle source de fuite conséquente étant évaluée au regard du seuil de fonctionnement comme pouvant porter atteinte à la sécurisation du giravion, un deuxième signal d'alarme est émis pour prévenir le pilote du giravion.

Le dispositif comporte à l'extrémité aval du circuit aéraulique, au moins un bol de récupération du lubrifiant potentiellement acheminé par le circuit aéraulique, sinon aussi un filtre à particules placé en amont du bol. De telles dispositions visent à éviter une pollution de l'environnement de la boîte de transmission.

En phase de fonctionnement en vol de la boîte de transmission, le dispositif est un dispositif de retenue du lubrifiant à l'intérieur du carter à l'encontre de son échappée à travers une source de fuite. La faculté du dispositif de contrôle à entretenir une dépressurisation stable à l'intérieur du carter est mise à profit pour en cas de besoin retenir le lubrifiant à l'intérieur du carter en évitant son échappée à travers une source de fuite. La quantité de lubrifiant contenue à l'intérieur du carter est maintenue sensiblement constante à partir de la dépressurisation du circuit aéraulique. La source de fuite peut néanmoins être révélée à partir des informations générées relatives à la mise en oeuvre en vol de l'organe générateur de dépression.

La présente invention a aussi pour objet une boîte de transmission d'un giravion du type à transmission mécanique de mouvement entre deux organes. Une telle boîte de transmission est principalement reconnaissable selon l'invention en ce qu'elle est équipée d'un dispositif de contrôle de l'état d'étanchéité d'un carter de la boîte de transmission tel qu'il vient d'être décrit.

La présente invention a aussi pour objet une boîte de transmission d'un giravion du type à montage d'arbres tournants. Une telle boîte de transmission est principalement reconnaissable selon l'invention en ce qu'elle est équipée d'un dispositif de contrôle de l'état d'étanchéité d'un carter de la boîte de transmission tel qu'il vient d'être décrit.

L'indépendance de structure du dispositif de contrôle permet son raccordement à une quelconque boîte de transmission, telle qu'une boîte de transmission mécanique, une boîte de montage d'arbres tournants ou toute autre boîte analogue logeant des organes en mouvement lubrifiés. Une telle indépendance est à apprécier notamment au regard d'une dissociation de la structure du dispositif par rapport à de quelconques dispositions particulières relatives à l'organisation structurelle et aux modalités d'installation ou de fonctionnement de la boîte de transmission, notamment au regard de modalités d'organisation de sa lubrification et/ou de son implantation.

La présente invention a aussi pour objet un procédé de mise en oeuvre d'un dispositif de contrôle de l'état d'étanchéité d'un carter d'une boîte de transmission tel qu'il vient d'être décrit.

Selon la présente invention, un tel procédé est principalement reconnaissable en ce que, préalablement à la mise en service d'une boîte de transmission, le procédé comprend les opérations suivantes :
-) raccorder le circuit aéraulique au carter par l'intermédiaire de l'évent dont il est pourvu,
-) générer une dépression à l'intérieur du carter par la mise en oeuvre de l'organe générateur de dépression placé sous la dépendance des moyens de régulation, et entretenir par les moyens de régulation la dépressurisation du carter au regard du dit seuil de consigne,
-) surveiller par un opérateur la mise en oeuvre de l'organe générateur de dépression par les moyens de régulation, au moins au regard de la fréquence de cette mise en oeuvre par rapport à une fréquence de consigne fondée sur une absence d'un passage d'air extérieur à travers le carter significatif d'une source de fuite en lubrifiant,
-) en cas échéant d'une dite source de fuite détectée à partir de la dite opération de surveillance, observer visuellement par un opérateur le carter maintenu en dépression et identifier la localisation d'au moins une cause de fuite.

L'opération de surveillance est avantageusement susceptible d'être une opération de consultation des données fournies par les moyens générateurs d'informations.

Selon une approche de la présente invention, le procédé comprend plus particulièrement les opérations suivantes :
A) en phase de fonctionnement d'une dite boîte de transmission, le dispositif étant implanté à bord d'un giravion en étant raccordé au carter,
   -) générer une dépression à l'intérieur du carter par la mise en oeuvre de l'organe générateur de dépression placé sous la dépendance des moyens de régulation jusqu'à parvenir au dit seuil de consigne, et entretenir stable par les moyens de régulation la dépressurisation du carter au regard du dit seuil de consigne,
   -) collecter et mémoriser un historique des données générées par les moyens générateurs d'informations, puis
B) en phase de maintenance du giravion au sol,
   -) restituer l'historique sous forme transcrite pour détecter par un opérateur une potentielle source de fuite à partir d'une observation de l'historique de données, puis
   -) en cas éventuel d'une dite source de fuite détectée :
      *) générer une dépression à l'intérieur du carter par la mise en oeuvre de l'organe générateur de dépression placé sous la dépendance des moyens de régulation et entretenir stable par les moyens de régulation la dépressurisation du carter au regard du dit seuil de consigne,
      *) observer visuellement par un opérateur le carter maintenu en dépression et identifier la localisation d'au moins une cause de fuite.

Selon une forme particulière d'exploitation du dispositif de la présente invention, le procédé comprend des opérations supplémentaires suivantes en phase de fonctionnement de la boîte de transmission à bord du giravion :
-) mesurer la pression atmosphérique par le capteur et la dépression entretenue à l'intérieur du carter par le manomètre,
-) évaluer par les moyens de calcul le différentiel de pression courant entre la pression atmosphérique mesurée et la dépression à l'intérieur du carter, et comparer le différentiel de pression courant avec le différentiel de pression de consigne,
-) déterminer par les moyens de calcul le seuil de consigne à entretenir pour maintenir le différentiel de pression de consigne.

De préférence, le procédé comprend en outre les opérations supplémentaires spécifiques suivantes :
-) déterminer par les moyens de calcul à partir de ladite opération de comparaison une valeur du différentiel de pression courant supérieure à la valeur du différentiel de pression de consigne,
-) manoeuvrer à l'ouverture le clapet par activation de l'actionneur induisant une entrée d'air extérieur à l'intérieur du circuit aéraulique, jusqu'à parvenir à la valeur du différentiel de pression de consigne à l'intérieur du circuit aéraulique.

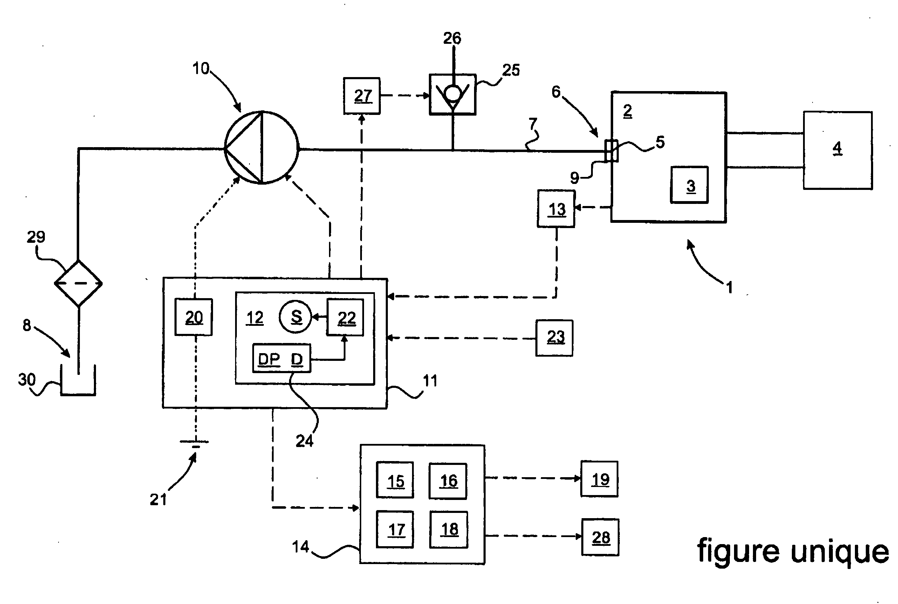

La présente invention va être décrite en relation avec la figure unique de la planche annexée, qui illustre un exemple préféré de réalisation d'un dispositif de la présente invention.

Sur la figure unique, une boîte de transmission 1 d'un giravion comporte un carter 2 qui loge des organes en mouvement 3 et qui est en communication fluidique avec un circuit fermé 4 de lubrification des dits organes en mouvement 3. Une telle boîte de transmission 1 est susceptible d'être indifféremment du type à transmission mécanique de mouvement entre deux organes, ou du type à montage d'organes en mouvement, tels que des arbres tournants. D'une manière générale, la boîte de transmission 1 comporte un carter 2 de confinement des organes en mouvement 3, le dit carter 2 étant équipé d'un dit circuit fermé 4 de lubrification. La structure et l'organisation du circuit fermé 4 de lubrification sont indifférents au regard des modalités proposées par la présente invention.

La boîte de transmission 1 est équipée d'un dispositif de contrôle de son étanchéité. Le dispositif est organisé pour fonctionner en autonomie indépendamment de tout autre équipement de la boîte de transmission 1, en procurant diverses fonctions relatives au contrôle de l'étanchéité de la boîte de transmission 1.

Au sol, le dispositif permet notamment de vérifier l'état de l'étanchéité de la boîte de transmission 1 préalablement à sa mise en service à bord d'un giravion ou à l'occasion d'une opération de maintenance du giravion. En vol, le dispositif est notamment exploité pour retenir le lubrifiant à l'intérieur du carter 2 en cas de présence d'une source de fuite, et pour collecter des informations relatives au fonctionnement du dispositif. De telles informations sont avantageusement exploitables au sol au cours d'une opération de maintenance du giravion, ou afin d'appréhender les conditions de vol du giravion.

Le carter 2 comporte un évent 5 qui est en communication aéraulique avec l'extrémité amont 6 d'un circuit aéraulique 7 ouvert à son extrémité aval 8. Le carter 2 et le circuit aéraulique 7 comportent des moyens de raccordement 9 étanche coopérant entre eux. Les dits moyens de raccordement 9 sont de préférence du type à jonction facilement réversible, tels que par mise en coopération entre des organes de vissage coopérant ou tout autre moyen analogue de jonction facilement réversible.

La dite jonction facilement réversible permet à un opérateur de mettre aisément en communication aéraulique le carter 2 avec un dit circuit aéraulique 7 ou inversement de rompre aisément ladite communication aéraulique. De telles dispositions permettent si besoin à un opérateur, soit d'exploiter un dit circuit aéraulique 7 de maintenance au sol pour détecter un éventuel défaut d'étanchéité de la boîte de transmission, soit d'exploiter un dit circuit aéraulique 7 embarqué à bord du giravion pour surveiller l'étanchéité de la boîte de transmission 1, voire pour intervenir sur la pression d'air circulant à travers le circuit aéraulique 7.

Il est à comprendre que le circuit aéraulique 7 de maintenance et le circuit aéraulique 7 embarqué sont de structures analogues, au moins en ce qui concerne une approche générale de la présente invention.

Le circuit aéraulique 7 est équipé d'un organe générateur de dépression 10, tel qu'une pompe à vide ou analogue. Une dépression est générée à l'intérieur du circuit aéraulique 7 avec pour effet de mettre en dépression le volume intérieur du carter 2 raccordé au circuit aéraulique 7. La mise en oeuvre de l'organe générateur de dépression 10 est placée sous la dépendance de moyens de commande 11.

Les moyens de commande 11 comprennent des moyens de régulation 12 de ladite dépression, dont la mise en oeuvre est placée sous la dépendance d'un manomètre 13. Ledit manomètre 13 est affecté à la mesure de la dépression générée à l'intérieur du circuit aéraulique 7, et préférentiellement à l'intérieur du carter 2 raccordé au circuit aéraulique 7. La dépression est maintenue stable à l'intérieur du carter 2 au regard d'un seuil de consigne S d'activation des moyens de régulation 12. Un tel seuil de consigne S est notamment défini au regard d'une dépression de référence D souhaitée être maintenue à l'intérieur du carter 2. La dépression de référence D est prédéfinie adaptée par rapport à un compromis entre une interdiction faite d'une échappée d'huile à travers une éventuelle source de fuite de la boîte de transmission 1 jugée acceptable, et une préservation des organes fragiles de la boîte de transmission 1, organes d'étanchéité notamment.

Au sol, l'étanchéité de la boîte de transmission 1 est potentiellement contrôlée préalablement à son implantation sur le giravion, notamment dans le cadre d'une opération de vérification de son étanchéité en prélude à sa mise en service. Une dépression est générée à l'intérieur du carter 2 par l'intermédiaire du circuit aéraulique 7, la dite dépression étant maintenue à un seuil de consigne correspondant à la dépression de référence D. La dépression générée à l'intérieur du carter 2 induit le cas échéant un passage d'air à travers une éventuelle source de fuite de la boîte de transmission 1. Une observation par un opérateur de l'effort fournit par l'organe générateur de dépression 10 pour maintenir à l'intérieur du carter 2 la dépression stable au regard de la dépression de référence D, est le cas échéant révélatrice de la présence et de l'importance d'une telle source de fuite éventuelle. Ladite observation est susceptible d'être effectuée par l'opérateur à partir de ses propres sens naturels.

Selon l'exemple perfectionné de réalisation illustré, les moyens de commande 11 sont en relation avec des moyens générateurs d'informations 14 relatives à la mise en oeuvre de l'organe générateur de dépression 10 par les moyens de commande 11, et plus particulièrement par les moyens de régulation 12. Au sol, l'opérateur peut exploiter les informations courantes fournies par les moyens générateurs d'informations 14, pour observer le fonctionnement de l'organe générateur de dépression 10 en vue de détecter une éventuelle source de fuite de la boîte de transmission 1.

Les dits moyens générateurs d'informations 14 associent notamment des moyens chronologiques 15 et des moyens de détection 16 d'une activation ou inversement d'un arrêt du fonctionnement de l'organe générateur de dépression 10. Les moyens générateurs d'informations 14 sont susceptibles encore d'associer, isolément ou en combinaison avec l'association précédente, les dits moyens chronologiques 15 avec des moyens d'évaluation de l'énergie électrique consommée 17 par l'organe générateur de dépression 10.

De préférence, les moyens générateurs d'informations 14 sont aussi associés à des moyens de mémoire 18 des informations qu'ils génèrent, voire encore isolément ou en combinaison avec l'association précédente avec des moyens de transcription 19 des informations générées.

Selon une forme préférée de réalisation, les moyens de transcription 19 sont des moyens amovibles, leur destination n'étant pas de demeurer embarqués à bord du giravion. Il est en effet préféré d'exploiter de tels moyens de transcription 19 au sol, à partir de leur mise en relation temporaire au sol avec les moyens de mémoire 18 pour retranscrire les informations qui ont été préalablement mémorisées en vol.

Les moyens de commande 11 comprennent un commutateur 20 manoeuvrable manuellement par l'opérateur au sol, pour activer ou inversement rompre la mise en relation entre une source d'énergie électrique 21 et l'organe générateur de dépression 10. Ladite source d'énergie électrique 21 est susceptible d'être formée d'une source au sol autonome d'énergie électrique, ou du réseau de bord du giravion dans le cadre d'un circuit aéraulique 7 embarqué. Un tel commutateur 20 est notamment mis à profit lors des opérations de maintenance de la boîte de transmission 1, qui peuvent nécessiter une mise à l'air libre du carter 2. Un tel commutateur 20 est aussi mis à profit dans le cadre d'une exploitation d'un circuit aéraulique 7 au sol raccordé temporairement au carter 2.

Selon une forme particulière de réalisation du circuit aéraulique 7, notamment correspondante à un circuit aéraulique 7 embarqué, les moyens de régulation 12 comprennent des moyens de calcul 22 du dit seuil de consigne S au regard d'un différentiel de pression de consigne DP à maintenir dans le circuit aéraulique 7 entre la pression atmosphérique et la dépression courante dans le circuit aéraulique 7. Un tel différentiel de pression de consigne DP est potentiellement induit en raison des variations d'altitudes de progression en vol du giravion. Le seuil de consigne S est corrigé selon les besoins par les moyens de calcul 22 pour maintenir le dit différentiel de pression de consigne DP.

A cet effet, les moyens de calcul 22 sont en relation d'une part avec le dit manomètre 13 et avec un capteur 23 de pression atmosphérique placé à l'extérieur du circuit aéraulique 7, et d'autre part avec des moyens de mémoire 24 d'une information relative à la dépression de référence D et/ou au dit différentiel de pression de consigne DP à maintenir à l'intérieur du circuit aéraulique 7.

Cependant, une première correction du seuil de consigne S à une altitude donnée rend inadapté un tel seuil de consigne S pour une autre altitude. La dépression potentiellement générée à travers le circuit aéraulique 7 est susceptible d'atteindre une valeur supérieure au dit différentiel de pression de consigne DP, ce qui n'est pas souhaitable. Dans ce cas, une deuxième correction du seuil de consigne S est générée pour adapter en conséquence la dépression à travers le circuit aéraulique 7, mais est sans effet en soi sinon à autoriser une admission d'air à l'intérieur du circuit aéraulique 7 pour abaisser la dépression courante.

A cet effet, le circuit aéraulique 7 est équipé d'un clapet 25 ménagé sur une entrée d'air 26 extérieur placée en dérivation sur le circuit aéraulique 7 entre ses extrémités amont 6 et aval 8. Le clapet 25 est manoeuvrable par un actionneur 27, dont la mise en oeuvre est placée sous la dépendance des moyens de commande 11, et plus spécifiquement sous la dépendance des moyens de calcul 22.

Les moyens générateurs d'informations 14 sont avantageusement générateurs d'informations complémentaires, notamment relatives à la pression atmosphérique mesurée, à la manoeuvre du clapet 25 par l'actionneur 27, et aux différentes opérations de calcul générées par les moyens de calcul 22.

Le dispositif est potentiellement équipé de moyens d'alarme 28, dont la mise en oeuvre est placée sous la dépendance des moyens générateurs d'informations 12. De tels moyens d'alarme 28 sont susceptibles d'être activés sous l'effet d'une mise en oeuvre soutenue de l'organe générateur de dépression 10, révélatrice de l'éventuelle importance d'une source de fuite de la boîte de transmission 1. Les moyens d'alarme 28 peuvent être exploités au sol lors d'une opération de maintenance pour donner une indication à un opérateur d'une éventuelle opération de réparation de la boîte de transmission 1 à effectuer ou tout au moins à prévoir. Les moyens d'alarme 28 peuvent être aussi exploités par le pilote du giravion, à partir d'un seuil d'alarme considéré comme pouvant porter atteinte à un vol sécurisé du giravion.

Il est à relever un avantage annexe procuré par le dispositif de la présente invention, qui réside dans une exploitation des dites informations mémorisées pour établir un historique de vol du giravion. La stabilité maintenue en vol par les moyens de régulation de la dépression générée à travers un dit circuit aéraulique, permet de révéler à partir du dit historique de vol les diverses conditions atmosphériques parmi lesquelles le giravion a successivement évolué. Un tel historique est apte à être exploité isolément, mais peut aussi être exploité en combinaison avec d'autres historiques de vol du fonctionnement de divers organes respectifs du giravion. A partir d'une telle exploitation combinée d'historiques de vol, des informations peuvent être déduites sur des améliorations techniques à apporter au giravion, et sur la définition de la nature et de la fréquence des opérations de maintenance à effectuer sur le giravion.

Le circuit aéraulique 7 est de préférence muni à son extrémité aval 8 d'un filtre à particules 29 placé en amont d'un bol 30 de récupération du lubrifiant potentiellement acheminé à travers le circuit aéraulique 7. Un tel bol 30 permet d'éviter de salir l'environnement de la boîte de transmission 1 par une échappée marginale de lubrifiant hors du carter 2 à travers le circuit aéraulique 7.

## Revendications

1. Dispositif de contrôle de l'état d'étanchéité d'un carter (2) logeant des organes en mouvement (3) lubrifiés que comprend une boîte de transmission (1) d'un giravion,
**caractérisé en ce que** le dispositif comprend :
-) un circuit aéraulique (7) ouvert sur l'atmosphère à son extrémité aval (8), le circuit aéraulique (7) comportant à son extrémité amont (6) des moyens de raccordement (9) étanche à un évent (5) du carter (2) et étant équipé d'un organe générateur de dépression (10) à l'intérieur du circuit aéraulique (7), la mise en oeuvre de l'organe générateur de dépression (10) étant placée sous la dépendance de moyens de commande (11), et
-) des moyens de régulation (12) de ladite dépression entretenue stable à l'intérieur du circuit aéraulique (7) au regard d'un seuil de consigne (S), la mise en oeuvre des moyens de régulation (12) étant au moins placée sous la dépendance d'un manomètre (13) de mesure de la dépression générée à l'intérieur du circuit aéraulique (7).

2. Dispositif selon la revendication 1,
**caractérisé en ce que** le dispositif comprend des moyens générateurs d'informations (14) au moins relatives à la mise en oeuvre de l'organe générateur de dépression (10) par les moyens de régulation (12).

3. Dispositif selon la revendication 2,
**caractérisé en ce que** les moyens générateurs d'informations (14) comprennent des moyens chronologiques (15) associés au moins à des moyens de détection (16) d'une activation et inversement d'un arrêt du fonctionnement de l'organe générateur de dépression (10), sinon aussi associés au moins à des moyens d'évaluation (17) de l'énergie électrique consommée par l'organe générateur de dépression (10).

4. Dispositif selon l'une quelconque des revendications 2 et 3,
**caractérisé en ce que** les moyens générateurs d'informations (14) sont associés au moins à des moyens de mémoire (18) des informations générées sinon aussi à des moyens de transcription (19) des informations générées.

5. Dispositif selon l'une quelconque des revendications 1 à 4,
**caractérisé en ce que** les moyens de commande (11) comprennent un commutateur (20) à commande manuelle d'alimentation sélective en énergie électrique de l'organe générateur de dépression (10).

6. Dispositif selon l'une quelconque des revendications 1 à 5,
**caractérisé en ce que** les moyens de régulation (12) comprennent des moyens de calcul (22) du seuil de consigne (S) au regard d'un différentiel de pression de consigne (DP) prédéterminé entre la dépression générée à l'intérieur du circuit aéraulique (7) et la pression atmosphérique mesurée par un capteur de pression (23) placé à l'extérieur du circuit aéraulique (7).

7. Dispositif selon la revendication 6,
**caractérisé en ce que** les moyens de régulation (12) comprennent un clapet (25) ménagé sur une entrée d'air (26) extérieur placée en dérivation du circuit aéraulique (7) entre ses extrémités, le clapet (25) étant manoeuvrable par un actionneur (27) dont la mise en oeuvre est placée sous la dépendance des moyens de calcul (22).

8. Dispositif selon les revendications 6 et 7,
**caractérisé en ce que** les moyens générateurs d'informations (14) sont générateurs d'informations complémentaires relatives au moins à la pression atmosphérique mesurée sinon aussi à la manoeuvre du clapet (25) par l'actionneur (27).

9. Dispositif selon l'une quelconque des revendications 2 à 8,
**caractérisé en ce que** le dispositif comporte des moyens d'alarme (19) dont la mise en oeuvre est placée sous la dépendance des moyens générateurs d'informations (14).

10. Dispositif selon l'une quelconque des revendications 1 à 9,
**caractérisé en ce que** le dispositif comporte à l'extrémité aval (8) du circuit aéraulique (7) au moins un bol (30) de récupération du lubrifiant potentiellement acheminé par le circuit aéraulique (7), sinon aussi un filtre à particules (29) placé en amont du bol (30).

11. Dispositif selon l'une quelconque des revendications 6 à 10,
**caractérisé en ce qu'**en phase de fonctionnement en vol de la boîte de transmission (1), le dispositif est un dispositif de retenue du lubrifiant à l'intérieur du carter (2) à l'encontre de son échappée à travers une source de fuite.

12. Boîte de transmission (1) d'un giravion du type à transmission mécanique de mouvement entre deux organes, équipée d'un dispositif selon l'une quelconque des revendications 1 à 11.

13. Boîte de transmission d'un giravion du type à montage d'arbres tournants, équipée d'un dispositif selon l'une quelconque des revendications 1 à 11.

14. Procédé de mise en oeuvre d'un dispositif selon l'une quelconque des revendications 1 à 11,
**caractérisé en ce que** préalablement à la mise en service d'une boîte de transmission (1), le procédé comprend les opérations suivantes :
-) raccorder le circuit aéraulique (7) au carter (2) par l'intermédiaire de l'évent (5) dont il est pourvu,
-) générer une dépression à l'intérieur du carter (2) par la mise en oeuvre de l'organe générateur de dépression (10) placé sous la dépendance des moyens de régulation (12), et entretenir par les moyens de régulation (12) la dépressurisation du carter (2) au regard du dit seuil de consigne (S),
-) surveiller par un opérateur la mise en oeuvre de l'organe générateur de dépression (10) par les moyens de régulation (12), au moins au regard de la fréquence de cette mise en oeuvre par rapport à une fréquence de consigne fondée sur une absence d'un passage d'air extérieur à travers le carter (2) significatif d'une source de fuite en lubrifiant,
-) en cas échéant d'une dite source de fuite détectée à partir de la dite opération de surveillance, observer visuellement par un opérateur le carter (2) maintenu en dépression et identifier la localisation d'au moins une cause de fuite.

15. Procédé selon la revendication 14,
caractérisé en ce l'opération de surveillance est une opération de consultation des données fournies par les moyens générateurs d'informations (14).

16. Procédé de mise en oeuvre d'un dispositif selon l'une quelconque des revendications 2 à 11,
**caractérisé en ce qu'**il comprend les opérations suivantes :
A) en phase de fonctionnement d'une dite boîte de transmission (1), le dispositif étant implanté à bord d'un giravion en étant raccordé au carter (2),
-) générer une dépression à l'intérieur du carter (2) par la mise en oeuvre de l'organe générateur de dépression (10) placée sous la dépendance des moyens de régulation (12) jusqu'à parvenir au dit seuil de consigne (S), et entretenir stable par les moyens de régulation (12) la dépressurisation du carter (2) au regard du dit seuil de consigne (S),
-) collecter et mémoriser un historique des données générées par les moyens générateurs d'informations (14), puis
B) en phase de maintenance du giravion au sol,
-) restituer l'historique sous forme transcrite pour détecter par un opérateur une potentielle source de fuite à partir d'une observation de l'historique de données, puis
-) en cas éventuel d'une dite source de fuite détectée :
*) générer une dépression à l'intérieur du carter (2) par la mise en oeuvre de l'organe générateur de dépression (10) placée sous la dépendance des moyens de régulation (12) et entretenir stable par les moyens de régulation (12) la dépressurisation du carter (2) au regard du dit seuil de consigne (S),
*) observer visuellement par un opérateur le carter (2) maintenu en dépression et identifier la localisation d'au moins une cause de fuite.

17. Procédé selon la revendication 16,
**caractérisé en ce qu'**en phase de fonctionnement de la boîte de transmission (1) à bord du giravion, le procédé comprend les opérations supplémentaires suivantes :
-) mesurer la pression atmosphérique par le capteur (23) et la dépression entretenue à l'intérieur du carter (2) par le manomètre (13),
-) évaluer par les moyens de calcul (22) le différentiel de pression courant entre la pression atmosphérique mesurée et la dépression à l'intérieur du carter (2), et comparer le différentiel de pression courant avec le différentiel de pression de consigne (DP),
-) déterminer par les moyens de calcul (22) le seuil de consigne (S) à entretenir pour maintenir le différentiel de pression de consigne (DP).

18. Procédé selon la revendication 17,
**caractérisé en ce que** le procédé comprend les opérations supplémentaires suivantes :
-) déterminer par les moyens de calcul (22) à partir de ladite opération de comparaison une valeur du différentiel de pression courant supérieure à la valeur du différentiel de pression de consigne (DP),
-) manoeuvrer à l'ouverture le clapet (25) par activation de l'actionneur (27) induisant une entrée d'air extérieur à l'intérieur du circuit aéraulique (7), jusqu'à parvenir à la valeur du différentiel de pression de consigne (DP) à l'intérieur du circuit aéraulique (7).

## Patentansprüche

1. Vorrichtung zur Kontrolle des Dichtheitszustands eines Gehäuses (2), welches sich bewegende, geschmierte Teile (3) aufnimmt, die ein Getriebe (1) eines Drehflügelflugzeugs aufweist,
**dadurch gekennzeichnet, dass** die Vorrichtung aufweist:
-) einen Luftkreislauf (7), der an seinem hinteren Ende (8) zur Umgebungsluft hin offen ist, wobei der Luftkreislauf (7) an seinem vorderen Ende (6) Mittel (9) zur dichten Verbindung mit einem Luftloch (5) des Gehäuses (2) aufweist, und wobei der Kreislauf ausgerüstet ist mit einem Unterdruckerzeugungsorgan (10) im Inneren des Luftkreislaufs (7), wobei der Betrieb des Unterdruckerzeugungsorgans (10) von einem Steuermittel (11) gesteuert wird, und
-) Mittel (12) zur Einstellung des Unterdrucks, der stabil im Inneren des Luftkreislaufs (7) bezüglich eines Soll-Schwellenwertes (S) gehalten wird, wobei der Betrieb der Einstellmittel (12) von mindestens einem Manometer (13) zur Messung des in dem Inneren des Luftkreislaufs (7) erzeugten Unterdrucks gesteuert wird.

2. Vorrichtung nach Anspruch 1,
**dadurch gekennzeichnet, dass** die Vorrichtung Mittel zur Erzeugung von Informationen (14) mindestens bezüglich des durch die Einstellmittel (12) gesteuerten Betriebs des Unterdruckerzeugungsorgans (10) aufweist.

3. Vorrichtung nach Anspruch 2,
**dadurch gekennzeichnet, dass** die Mittel zur Erzeugung von Informationen (14) chronologische Mittel (15) aufweisen, die mindestens mit Mitteln (16) zur Erfassung einer Aktivierung und umgekehrt eines Stoppens des Betriebs des Unterdruckerzeugungsorgans (10) verbunden sind, die anderenfalls auch mindestens mit Mitteln (17) zur Berechnung der von dem Unterdruckerzeugungsorgan (10) verbrauchten elektrischen Energie verbunden sind.

4. Vorrichtung nach einem der Ansprüche 2 und 3,
**dadurch gekennzeichnet, dass** die Mittel (14) zur Erzeugung von Informationen mindestens mit Mitteln (18) zur Speicherung von erzeugten Informationen verbunden sind, anderenfalls auch mit Mitteln (19) zur Übertragung von erzeugten Informationen.

5. Vorrichtung nach einem der Ansprüche 1 bis 4,
**dadurch gekennzeichnet, dass** die Steuermittel (11) einen Umschalter (20) aufweisen zur manuellen Steuerung der selektiven Versorgung des Unterdruckerzeugungsorgans (10) mit elektrischer Energie.

6. Vorrichtung nach einem der Ansprüche 1 bis 5,
**dadurch gekennzeichnet, dass** die Einstellmittel (12) Mittel (22) zur Berechnung des Soll-Schwellenwerts (S) bezüglich einer vorbestimmten Soll-Druckdifferenz (DP) zwischen dem im Inneren des Luftkreislaufs (7) erzeugten Unterdruck und dem Atmosphärendruck, der durch einen Drucksensor (23) gemessen wird, der außerhalb des Luftkreislaufs (7) angeordnet ist, aufweisen.

7. Vorrichtung nach Anspruch 6,
**dadurch gekennzeichnet, dass** die Einstellmittel (12) ein Ventil (25) aufweisen, das auf einem Einlass (26) für Außenluft angeordnet ist, der als Abzweigung des Luftkreislaufs (7) zwischen dessen Enden angeordnet ist, wobei das Ventil (25) durch ein Betätigungsorgan (27) manövrierbar ist, dessen Betrieb von Rechenmitteln (22) gesteuert wird.

8. Vorrichtung nach den Ansprüchen 6 und 7,
**dadurch gekennzeichnet, dass** die Mittel (14) zur Erzeugung von Informationen Erzeuger von zusätzlichen Informationen bezüglich mindestens des gemessenen Atmosphärendrucks, andernfalls auch bezüglich der Bestätigung des Ventils (25) durch das Betätigungsorgan (27) sind.

9. Vorrichtung nach einem der Ansprüche 2 bis 8,
**dadurch gekennzeichnet, dass** die Vorrichtung Alarmmittel (19) aufweist, deren Betätigung von Mitteln zur Erzeugung von Informationen (14) gesteuert wird.

10. Vorrichtung nach einem der Ansprüche 1 bis 9,
**dadurch gekennzeichnet, dass** die Vorrichtung am hinteren Ende (8) des Luftkreislaufs (7) mindestens eine Auffangschale (30) für Schmiermittel, welches möglicherweise durch den Luftkreislauf (7) befördert wird, wenn nicht auch einen Partikelfilter (29), der vor der Schale (30) angeordnet ist, aufweist.

11. Vorrichtung nach einem der Ansprüche 6 bis 10,
**dadurch gekennzeichnet, dass** in einer Flugbetriebsphase des Getriebes (1) die Vorrichtung eine Vorrichtung zum Zurückhalten des Schmiermittels im Inneren des Gehäuses (2) gegen dessen Entweichen durch ein Leck ist.

12. Getriebe (1) eines Drehflügelflugzeugs mit einer mechanischen Übertragung von Bewegung zwischen zwei Organen, das mit einer Vorrichtung nach einem der Ansprüche 1 bis 11 ausgerüstet ist.

13. Getriebe eines Drehflügelflugzeugs mit einer Montage sich drehender Wellen, welches mit einer Vorrichtung nach einem der Ansprüche 1 bis 11 ausgerüstet ist.

14. Verfahren zum Betreiben einer Vorrichtung nach einem der Ansprüche 1 bis 11,
**dadurch gekennzeichnet, dass** vor der Inbetriebnahme eines Getriebes (1) das Verfahren die folgenden Schritte aufweist:
-) Verbinden des Luftkreislaufs (7) mit dem Gehäuse (2) über ein Luftloch (5), mit dem dieses versehen ist,
-) Erzeugen eines Unterdrucks im Inneren des Gehäuses (2) durch den Betrieb des Unterdruckerzeugungsorgans (10), welches von Einstellmitteln (12) gesteuert wird, und Aufrechterhalten des Unterdrucks im Gehäuse (2) bezüglich des Soll-Schwellenwertes (S) durch die Einstellmittel (12),
-) Überwachen des Betriebs des Unterdruckerzeugungsorgans (10) durch eine Bedienungsperson mit den Einstellmittel (12), mindestens bezüglich der Frequenz des Betriebs relativ zu einer SollFrequenz, die auf der Abwesenheit eines Durchtritts von Außenluft durch das Gehäuses (2) gründet, welche auf ein Schmiermittelleck hinweist,
-) im gegebenen Fall eines durch das Überwachungsverfahren erfassten Lecks, visuelles Beobachten des Gehäuses (2) durch eine Bedienungsperson, wobei das Gehäuse unter Unterdruck gehalten wird, und Identifizieren der Stelle mindestens einer Ursache für ein Leck.

15. Verfahren nach Anspruch 14,
**dadurch gekennzeichnet, dass** das Überwachungsverfahren ein Verfahren zur Abfrage von Daten ist, welche von den Informationserzeugungsmitteln (14) beliefert werden.

16. Verfahren zum Betreiben einer Vorrichtung nach einem der Ansprüche 2 bis 11,
**dadurch gekennzeichnet, dass** es folgende Schritte aufweist:
A) in der Betriebsphase eines besagten Getriebes (1), wobei die Vorrichtung an Bord eines Drehflügelflugzeugs eingebaut ist und mit dem Gehäuse (2) verbunden ist,
-) Erzeugen eines Unterdrucks im Inneren des Gehäuses (2) durch den Betrieb des Unterdruckerzeugungsorgans (10), welches von Einstellmitteln (12) gesteuert wird, bis der besagte Soll-Schwellenwert (S) erreicht ist, und Stabilhalten des Unterdrucks des Gehäuses (2) mit Hilfe der Einstellmittel (12) gegenüber dem besagten Soll-Schwellenwert (S),
-) Sammeln und Speichern des Verlaufs von Daten, die von den Mitteln zur Erzeugung von Informationen (14) erzeugt werden, und dann
B) während einer Instandsetzungsphase des Drehflügelflugzeugs am Boden
-) Wiederherstellen des Verlaufs in Form eines Transskripts, um durch eine Bedienungsperson eine potentielle Leckquelle ausgehend von einer Beobachtung des Verlaufs von Daten zu erfassen, und dann
-) im möglichen Fall eines erfassten Lecks:
*) Erzeugen eines Unterdrucks im Inneren des Gehäuses (2) durch den Betrieb des Unterdruckerzeugungsorgans (10), welches von Einstellmitteln (12) gesteuert wird, und Stabilhalten des Unterdrucks im Gehäuse (2) durch die Einstellmittel (12) bezüglich des besagten Soll-Schwellenwertes (S),
*) visuelles Beobachten des Gehäuses (2) durch eine Bedienungsperson, wobei das Gehäuse unter Unterdruck gehalten wird, und Identifizieren des Ortes mindestens einer Ursache für ein Leck.

17. Verfahren nach Anspruch 16,
**dadurch gekennzeichnet, dass** in einer Betriebsphase des Getriebes (1) an Bord eines Drehflügelflugzeugs das Verfahren folgende zusätzliche Schritte aufweist:
-) Messen des atmosphärischen Drucks durch den Sensor (23) und des Unterdrucks, der im Inneren des Gehäuses (2) aufrechterhalten wird, durch das Manometer (13),
-) Berechnen der aktuellen Druckdifferenz zwischen dem gemessenen Atmosphärendruck und dem Unterdruck im Inneren des Gehäuses (2) mit den Rechenmitteln und Vergleichen der aktuellen Druckdifferenz mit der Soll-Druckdifferenz (DP),
-) Bestimmen des beizubehaltenden Sollwertes (S) durch die Rechenmittel (22), um die Soll-Druckdifferenz (DP) aufrechtzuerhalten.

18. Verfahren nach Anspruch 17,
**dadurch gekennzeichnet, dass** das Verfahren folgende zusätzliche Schritte aufweist:
-) Bestimmen eines aktuellen Druckdifferenzwertes, der größer ist als der Soll-Druckdifferenzwert (DP) mit den Rechenmitteln (22) ausgehend von dem Vergleich,
-) Öffnen des Ventils (25) durch Aktivierung des Betätigungsorgans (27), was zu einem Eintritt von Außenluft in das Innere des Luftkreislaufs (7) führt, bis der Soll-Druckdifferenzwert (DP) im Inneren des Luftkreislaufs (7) erreicht wird.

## Claims

1. A device for checking the tightness of a casing (2) housing lubricated moving members (3) of a transmission gearbox (1) of a rotorcraft,
**characterised in that** the device comprises:
-) an aeraulic circuit (7) open to the atmosphere at its downstream end (8), the aeraulic circuit (7) comprising at its upstream end (6) connection means (9) for leaktight connection to a vent (5) of the casing (2) and being equipped with a depressurisation member (10) for generating a depressurisation within the aeraulic circuit (7), the operation of the depressurisation member (10) being under the control of control means (11), and
-) means (12) for regulating said depressurisation which is kept stable within the aeraulic circuit (7) relative to a setpoint threshold (S), the operation of the regulating means (12) being at least under the control of a pressure gauge (13) for measuring the depressurisation generated within the aeraulic circuit (7).

2. A device according to Claim 1,
**characterised in that** the device comprises information-generating means (14) for generating information which at least relates to the operation of the depressurisation member (10) by the regulating means (12).

3. A device according to Claim 2,
**characterised in that** the information-generating means (14) comprise timing means (15) associated at least with detection means (16) for detecting activation and conversely stopping of the operation of the depressurisation member (10), if not also associated at least with evaluation means (17) for evaluating the electrical energy consumed by the depressurisation member (10).

4. A device according to any one of Claims 2 and 3,
**characterised in that** the information-generating means (14) are associated at least with storage means (18) for storing the information generated, if not also with transcription means (19) for transcribing the information generated.

5. A device according to any one of Claims 1 to 4,
**characterised in that** the control means (11) comprise a manually-operated switch (20) for selectively supplying electrical energy to the depressurisation member (10).

6. A device according to any one of Claims 1 to 5,
**characterised in that** the regulating means (12) comprise calculation means (22) for calculating the setpoint threshold (S) relative to a predetermined setpoint pressure differential (DP) between the depressurisation generated within the aeraulic circuit (7) and the atmospheric pressure measured by a pressure sensor (23) placed outside the aeraulic circuit (7).

7. A device according to Claim 6,
**characterised in that** the regulating means (12) comprise a valve (25) formed on an external-air inlet (26) which forms a branch of the aeraulic circuit (7) between its ends, the valve (25) being able to be operated by an actuating element (27), the operation of which is under the control of the calculation means (22).

8. A device according to Claims 6 and 7,
**characterised in that** the information-generating means (14) generate additional information relating at least to the measured atmospheric pressure, if not also to the operation of the valve (25) by the actuating element (27).

9. A device according to any one of Claims 2 to 8,
**characterised in that** the device comprises alarm means (19), the operation of which is under the control of the information-generating means (14).

10. A device according to any one of Claims 1 to 9,
**characterised in that** the device comprises, at the downstream end (8) of the aeraulic circuit (7), at least one pan (30) for recovering the lubricant potentially conveyed by the aeraulic circuit (7), if not also a particle filter (29) placed upstream from the pan (30).

11. A device according to any one of Claims 6 to 10,
**characterised in that**, during the phase of operation in flight of the transmission gearbox (1), the device is a device for retaining lubricant within the casing (2) to prevent it from escaping via a leakage source.

12. A transmission gearbox (1) of a rotorcraft of the type with mechanical transmission of movement between two members, which is equipped with a device according to any one of Claims 1 to 11.

13. A transmission gearbox of a rotorcraft of the type for mounting rotary shafts, which is equipped with a device according to any one of Claims 1 to 11.

14. A method of operating a device according to any one of Claims 1 to 11,
**characterised in that**, prior to a transmission gearbox (1) being put into service, the method comprises the following operations:
-) connecting the aeraulic circuit (7) to the casing (2) by means of the vent (5) with which it is provided,
-) generating a depressunisation within the casing (2) by operating the depressurisation member (10) which is under the control of the regulating means (12), and, by the regulating means (12), maintaining the depressurisation of the casing (2) relative to said setpoint threshold (S),
-) an operator monitoring the operation of the depressurisation member (10) by the regulating means (12), at least in relation to the frequency of this operation relative to a setpoint frequency which is based on the absence of any passage of external air through the casing (2) which indicates a source of a leak of lubricant,
-) should a said leakage source be detected by said monitoring operation, an operator visually observing the casing (2) which is kept in depressurisation and identifying the location of at least one cause of leakage.

15. A method according to Claim 14,
**characterised in that** the monitoring operation is an operation of consulting the data supplied by the information-generating means (14).

16. A method of operating a device according to any one of Claims 2 to 11,
**characterised in that** it comprises the following operations:
A) in the phase of operation of a said transmission gearbox (1), the device being installed on board a rotorcraft and being connected to the casing (2),
-) generating a depressurisation within the casing (2) by operating the depressurisation member (10) which is under the control of the regulating means (12), until said setpoint threshold (S) is reached, and, by the regulating means (12), keeping the depressurisation of the casing (2) stable relative to said setpoint threshold (S),
-) collecting and storing a history of the data generated by the informationgenerating means (14), then
B) in the phase of maintenance of the rotorcraft on the ground,
-) restoring the history in transcribed form in order for an operator to detect a potential leakage source based on observation of the data history, then
-) in the possible event of a said leakage source being detected:
*) generating a depressurisation within the casing (2) by operating the depressurisation member (10) which is under the control of the regulating means (12), and, by the regulating means (12), keeping the depressurisation of the casing (2) stable relative to said setpoint threshold (S),
*) an operator visually observing the casing (2) which is kept in depressurisation and identifying the location of at least one cause of leakage.

17. A method according to Claim 16, **characterised in that** in the phase of operation of the transmission gearbox (1) on board the rotorcraft, the method comprises the following additional operations:
-) measuring the atmospheric pressure by means of the sensor (23) and measuring the depressurisation maintained within the casing (2) by the pressure gauge (13),
-) evaluating by means of the calculation means (22) the current pressure differential between the measured atmospheric pressure and the depressurisation within the casing (2), and comparing the current pressure differential with the setpoint pressure differential (DP),
-) determining by means of the calculation means (22) the setpoint threshold (S) to be maintained in order to maintain the setpoint pressure differential (DP).

18. A method according to Claim 17,
**characterised in that** the method comprises the following additional operations:
-) determining by means of said calculation means (22) based on said comparison operation a value of the current pressure differential which is greater than the value of the setpoint pressure differential (DP),
-) operating the valve (25) to open by activating the actuating element (27) causing the entry of external air into the aeraulic circuit (7), until the value of the setpoint pressure differential (DP) is reached within the aeraulic circuit (7).
